# EUROPEAN PATENT APPLICATION

(11) **EP 1 187 058 A2**
(43) Date of publication of application: **13.03.2002**
(21) Application number: 01120319.7
(22) Date of filing: 24.08.2001
(51) Int. Cl.: G06K 15/00

(54) **Printing apparatus, data storage medium, interface device, printer control method, and interface control method**

(30) Priority: 30.08.2000 JP 2000261084
(71) Applicant: SEIKO EPSON CORPORATION, Shinjuku-ku, Tokyo 163-0811 (JP)
(72) Inventor: Tsukada, Toshihiro, Suwa-shi, Nagano-ken, 392-8502 (JP)
(74) Representative: Hoffmann, Eckart, Dipl.-Ing.

(57) **Abstract**

A printing apparatus and interface device backup operating parameters and operating history data so that the these data can be easily restored. A memory (109) in the printer (101) nonvolatilely stores operating parameter data. Commands from a host (161) are passed by the interface device (131) and received by a receiver (103). If the command data is a print command, the print mechanism (108) prints the specified text or image. If the command data is a command for updating the operating parameter data, the corresponding data in the memory (109) is updated and at an appropriate backup timing the data in the memory (109) is copied to memory (135) in the interface device (131). The data backed up to the interface device (131) can then be restored to memory (109) in the printer from the memory (135) in the interface device at an appropriate data restore time.

## Description

The present invention relates generally to a printer, a data storage medium, an interface device, a printer control method, and an interface control method. More specifically, this invention relates to a printer that is useful for backup storage of printer settings data (printer operating parameter data) and operating history data, an interface device, a printer control method, an interface control method, and a computer-readable data storage medium carrying a program that achieves the backup storage functions.

Many prior art printers store printer settings in a flash EEPROM (Electrically Erasable Programmable Read Only Memory). The stored information is used to restore printer settings when the power is turned on so that the printer operates according to the preferred user settings. Such printers also typically store history data such as the number of pages printed, and, in case of an ink jet printer, data useful for deciding when the ink cartridge requires replacement, as well as data on the ink consumption and the remaining ink volume. These data are also stored in the flash EEPROM. This printer operating history can then be examined to help reduce printing costs, improve ink characteristics, and make other various improvements to the printer.

A problem with such prior art printers is that the flash EEPROM is typically mounted on the same main circuit board on which the printer control CPU, RAM used for temporary storage by the CPU, ROM for nonvolatile storage of the printer's initialization program, font data etc., and other components are mounted. When a problem happens with any one of these components and the main circuit board malfunctions, it is difficult with a prior art printer to extract the settings and history data stored in the flash EEPROM and copy these data to the flash EEPROM on a replacement board.

Different interfaces standards (such as RS-232C, USB (Universal Serial Bus), and parallel) are available to connect a printer with a host device that sends print commands, printer settings, and other command data to the printer. Interface devices are used to convert the TTL voltage level and the specific interface standard used by the host device for communication with the printer. Technologies enabling a printer's interface device to be replaced are also available. This allows making a printer compatible with different communication interfaces by simply installing the appropriate interface device. Existing printers can therefore be made compatible with new interface standards by simply replacing the interface device.

There is, therefore, a need for technology enabling printer settings and history data to be easily backed up so that the settings and history data to be easily restored after repair is completed when the printer's main circuit board malfunctions. There is a particularly great need for technology such as this that uses the interface device.

An object of this invention is to provide a printer that is capable of backing up operating parameter data and history data, an interface device, a computer-readable data storage medium carrying a program that stores these operating parameter and history data in the printer, and a printer control method and an interface control method typically achieved by running said program.

These objects are achieved with a printing apparatus as claimed in claim 1, a computer-readable data storage medium as claimed in claim 8, an interface device as claimed in claim 10 and the methods as claimed in claims 12 and 18, respectively. Preferred embodiments of the invention are subject-matter of the dependent claims.

User-defined printer settings, i.e., operating parameter data and printer history data such as the ink consumption in case of an inkjet printer, referred to below as the "protected data," are updated to values different from the default settings preset at the factory prior to shipping and stored in a rewritable protected data memory (first memory unit) located on the main circuit board of the printer. The result of accumulated research into a solution for the problems described above, revealed that by saving this protected data at specific times to a rewritable protected data reserve memory (second memory unit) located separately from the main circuit board in the interface device the protected data can be easily restored from this reserve memory to the protected data memory located on a newly installed main circuit board when the previous main circuit board malfunctions and is replaced.

The data storage medium according to the invention includes a Compact Disc, a floppy disk, a hard disc, a magneto-optical disc, a digital video disc, a magnetic tape, semiconductor memory, a digital versatile disc, and a memory card. This data storage medium could also be made accessible through a server on the World Wide Web (WWW) so that the program can be downloaded to update a program stored in the computer and the updated program can be run by the computer (typically the CPU of the printer) to achieve a printing apparatus according to our invention.

This invention, thus, provides a printing apparatus capable of backing up and restoring printer operating parameters and operating history data, an interface device, printer control method, interface device control method, and a computer-readable data storage medium recording a program achieving the data backup and restore processes.

It is possible to store at an appropriate time such data as printer operating parameters that have been updated from default values preset at the factory prior to shipping, and printer operating history data such as ink consumption information, stored in a rewritable first memory unit provided on the main circuit board of the printer to a rewritable second memory unit provided in the interface device other than the main circuit board. As a result, if the main circuit board malfunctions and is replaced, the protected data backed up to the second memory unit can be copied to the first memory unit of the replacement main circuit board, thereby easily restoring the protected data.

Further objects and advantages of the present invention will be more fully understood from the following detailed description of preferred embodiments of the invention in conjunction with the accompanying drawings, in which:
- Fig. 1: is a functional block diagram of a printer and its interface device according to a preferred embodiment of the present invention;
- Fig. 2: is a detailed block diagram showing the functions of a data protection unit;
- Fig. 3: is a flow chart of the data protection process; and
- Fig. 4: is a flow chart of the store/restore control process shown in the data protection process in Fig. 3.

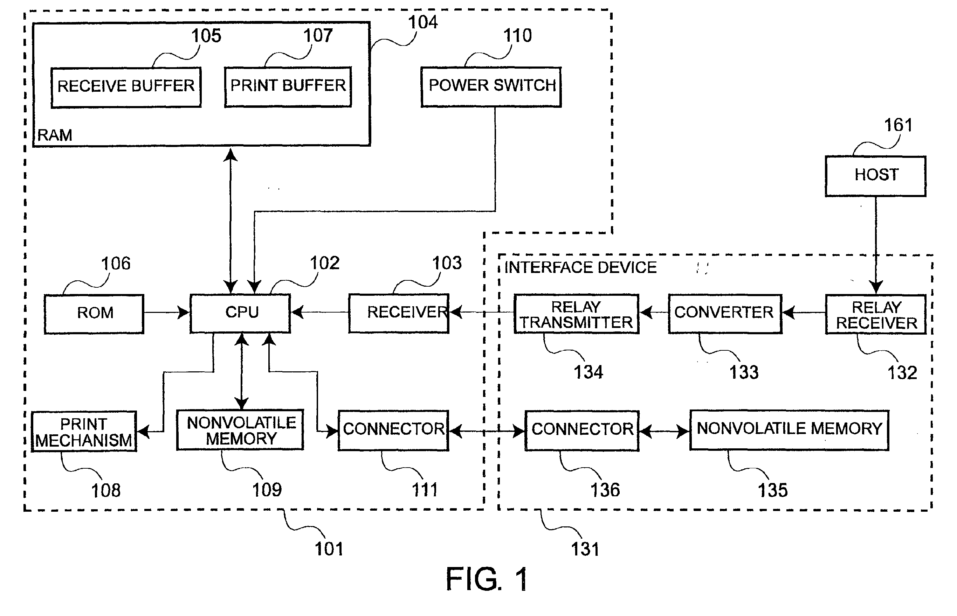

Fig. 1 is a schematic diagram showing parts of a printer and an interface device according to an embodiment of the invention.

The printer 101 communicates with the host 161 or other external device through the interface device 131. When the host 161 sends command data (first data) to the printer 101, the data is received by the relay receiver 132 of the interface device 131. The converter 133 handles voltage level conversion and interface standards conversion for the received command data, and passes the result through the relay transmitter 134 to the printer 101.

The receiver 103 of printer 101 receives the command data from interface device 131. When the receiver 103 detects that command data has been received, it issues a receive interrupt to the CPU 102 controlling the printer 101. The CPU 102 stores the command data in the receive buffer 105, an area reserved in RAM 104, as part of the receive interrupt process, and the receive interrupt process then ends.

While no interrupt is generated, the CPU 102 detects if the receive buffer 105 is empty. If command data is stored in the receive buffer 105, the CPU 102 reads and interprets the command data in FIFO (first in, first out) order.

If the command data is a print command for printing text or graphics, the CPU 102 reads the appropriate font information for the text or graphics specified in the print command from the ROM 106, and generates a print image in the print buffer 107, another area of RAM 104.

When the print buffer 107 becomes full or a CR (carriage return) is detected in the interpreted command data, the print mechanism 108 including a print head, a platen, and paper feed rollers is driven according to the print image in the print buffer to print the text or graphic on paper, film, or other printing medium.

If the command data is a printer setting command for setting a particular operating parameter in the printer 101, the corresponding operating parameter is stored in the nonvolatile memory 109, which may be a flash EEPROM or other type of flash memory or rewritable nonvolatile memory. In case the printer 101 is an inkjet printer, the ink consumption, the date at which the ink cartridge was replaced, and/or other data are also stored in memory 109 as history data.

The operating parameter data and history data that may be stored in memory 109 include the following.

Operating parameters:
- type of font used
- paper size and orientation
- margin size
- print speed
- print density
- print medium type

History data:
- ink replacement date, amount of ink used
- number of lines printed
- firmware version
- operating time

The operating parameters and history data listed above represent examples only, and other and/or additional operating parameters and history data can be stored. Furthermore, the operating parameters and history data stored in memory 109 are sent to the interface device 131 under specific conditions for back-up purposes as described in more detail below. The information thus sent to the interface device 131, i.e., the above operating parameter data and history data, is referred to below as "protected data."

Protected data sent to the interface device 131 is stored in a nonvolatile memory 135 in the interface device 131. Storing this protected data in the memory 135 is controlled by the CPU 102 of printer 101.

CPU 102 of printer 101 also controls copying the protected data from the memory 135 back to the memory 109 in printer 101 under certain conditions. It is therefore not necessary to provide a CPU in the interface device 131 to control the memory 135.

Printer 101 can be turned on and off by operating a power switch 110. When switch 110 is turned on, CPU 102 runs an initialization program stored in ROM 106 and runs any commands from the host.

When a power off instruction is detected due to the power switch 110 being operated, CPU 102 first runs a specific shutdown process and then turns off the power to printer 101. This shutdown process includes, for example in case of an inkjet printer, a process for cleaning the print head of the print mechanism 108.

Although not shown in the figure, power is supplied from printer 101 to interface device 131 when power switch 110 is turned on.

The transfer of protected data between printer 101 and interface device 131 is through a connector 111 of printer 101 and a connector 136 of interface device 131.

The memory 135 of interface device 131 is typically connected directly to the bus of CPU 102 through connectors 111 and 136.

### Data backup events

The conditions, referred to below as the "data backup events," under which the CPU 102 of printer 101 copies (saves) the protected data from the memory 109 to the memory 135 in interface device 131 include the following:
(1) If the protected data stored in memory 109 differ from default values when the power switch 110 is operated and printer 101 is turned on
   Whether the stored protected data differ from the default values can be determined by, for example, detecting whether a particular count value stored in memory 109 is set to a known default value, or using a checksum, CRC (Cyclic Redundancy Check), or other technology.
(2) If the power switch 110 is operated to turn printer 101 off
   A mechanical process is generally part of the printer 101 shutdown process, and typically is relatively time-consuming. The protected data is therefore backed-up to the memory 135 parallel to this mechanical process.
(3) If no command data is received for a certain time and if the receive buffer 105 and print buffer 107 are both empty
   This is typical of a situation in which the CPU 102 is idle, and this idle time can therefore be used to backup the protected data.
(4) If the received command data updates data stored in the memory 109
   The backup process is typically run whenever a command changes a printer's operating parameter.
(5) If the command data is a backup command

A data sequence such as "0x1b 0x1d 0x73 0x01 0x00 0x03", in which 0x is a prefix indicating a hexadecimal code, can be used as a backup command

The conditions listed above may either each alone or two or more in combination trigger the data backup.

### Data restore events

The conditions, referred to below as the "data restore events," under which the CPU 102 of printer 101 copies (restores) the protected data from the memory 135 back to the memory 109 include the following:
(1) If, when the power switch 110 is operated and the power to printer 101 is turned on, either the memory 109 is not appropriately formatted or the protected data is not correctly stored
   This situation occurs, for example, when the data in memory 109 has been lost for some reason or the main circuit board has been replaced due to a malfunction.
   If the protected data are restored in this situation a repair technician does not need access to the interface device 131. After the printer 101 is repaired and the interface device 131 is reinstalled, the data restore process automatically copies the protected data from the memory 135 in the interface device 131 to the memory 109 in the printer when the power is turned on.
(2) If the received command data is a data restore command
   A data sequence such as "0x1b 0x1d 0x73 0x02 0x00 0x03", in which 0x is a prefix indicating a hexadecimal code, can be used as a data restore command.
   When the main circuit board is repaired, the repair technician, for example, could send this command to the printer 101 to restore the protected data.

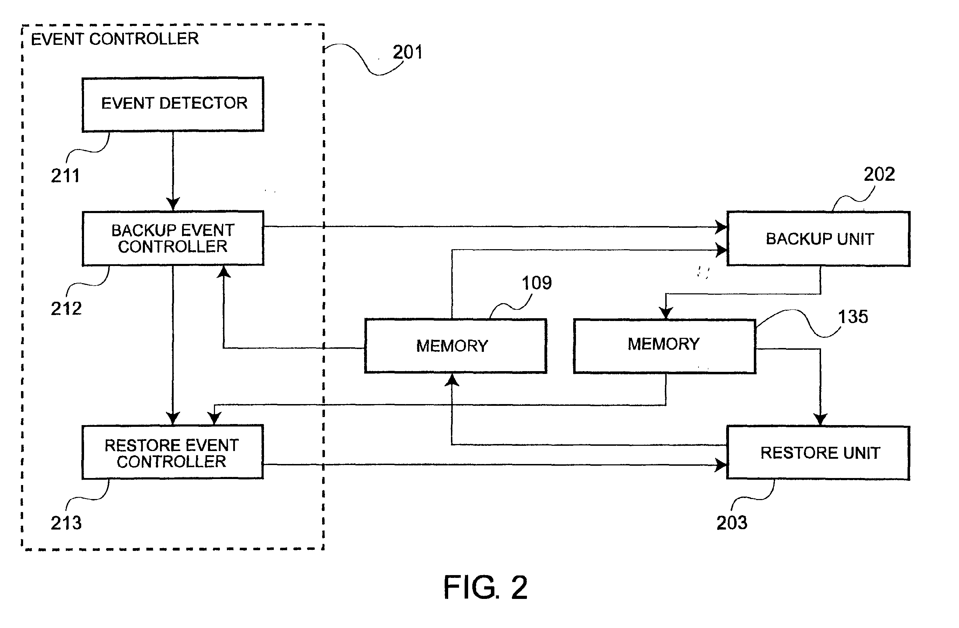

Fig. 2 is a functional block diagram showing the details of a data protection functional unit implemented by the CPU 102 for performing the data backup and restore processes for protecting the protected data.

As shown in Fig. 2, the data protection functional unit comprises a event controller 201, a data backup unit 202, and a data restore unit 203.

The backup unit 202 reads the protected data from the memory 109 and writes it to the memory 135. As may be necessary, the restore unit 203 reads the protected data from the memory 135 and writes it into the memory 109. The event controller 201 detects the data backup and data restore events at which the backup unit 202 and restore unit 203 are to operate.

The event controller 201 has an event detector 211, a backup event controller 212, and a restore event controller 213.

The event detector 211 detects the data backup and data restore events, which, as mentioned above, are events (conditions) occurring in the printer or the interface device, or are commands from the host (the data backup or the data restore command).

If the event detector 211 detects any of the data backup and data restore events, the controller 212 reads the protected data from the memory 109 and compares it with the default values also stored in the memory 109 to determine whether the read protected data should be saved to the memory 135. The controller 212 thus determines whether the detected event is a data backup event. Examples of how this may be determined are described below.

Backup example 1: Count values for protected data such as the number of lines printed, the printer operating time, the number automatic paper cutter operations, and the number of times writing to a non-volatile memory has been performed have all a default (initial) value of 0, for example. The protected data stored in memory 109 are compared with the default values. If the value of any one of the count values differs from the default value, it is time to back up the protected data.

Backup example 2: A checksum based on the default values of the protected data is compared with the checksum calculated for the protected data currently stored in the memory 109. If the checksums differ, it is time to back up the protected data.

Backup example 3: Data stored at a particular address in the memory 109 is used as a rewrite flag, and if the rewrite flag differs from a default value, it is time to back up the protected data.

For example, if the default value of the rewrite flag is 1 and any change of the protected data in memory 109 clears the rewrite flag to 0, a value 0 of the rewrite flag indicates that the protected data has been updated at least once.

Backup example 4: An identification number (ID number) for the main circuit board of the printer 101 is stored in the memory 109 and is also stored as a default ID number in the memory 135. This makes it possible to determine if the interface device has been replaced by comparing the ID number stored in the memory 109 with the default ID number stored in the memory 135. If the ID numbers differ, it is time to back up the protected data.

If the event detected by the event detector 211 is determined not to be a data backup event, i.e., if the memory 109 is found to be set to the default values, the controller 213 reads the protected data from the memory 135 and compares it with preset default values also stored in the memory 135 to determine whether the protected data need to be restored to the memory 109. The controller 213 thus determines whether the detected event is a data restore event. Examples of how this may be determined are described below.

Restoring data, example 1: Count values representing the protected data stored in the memory 135 are compared with the default values (assumed to be 0 as mentioned above), and if any one of the count values differs from the default value, the protected data had been backed-up and, thus, need to be restored.

Restoring data, example 2: A checksum based on the default values of the protected data is compared with the checksum calculated for the protected data stored in memory 135. If the checksums differ, it is time to restore the protected data.

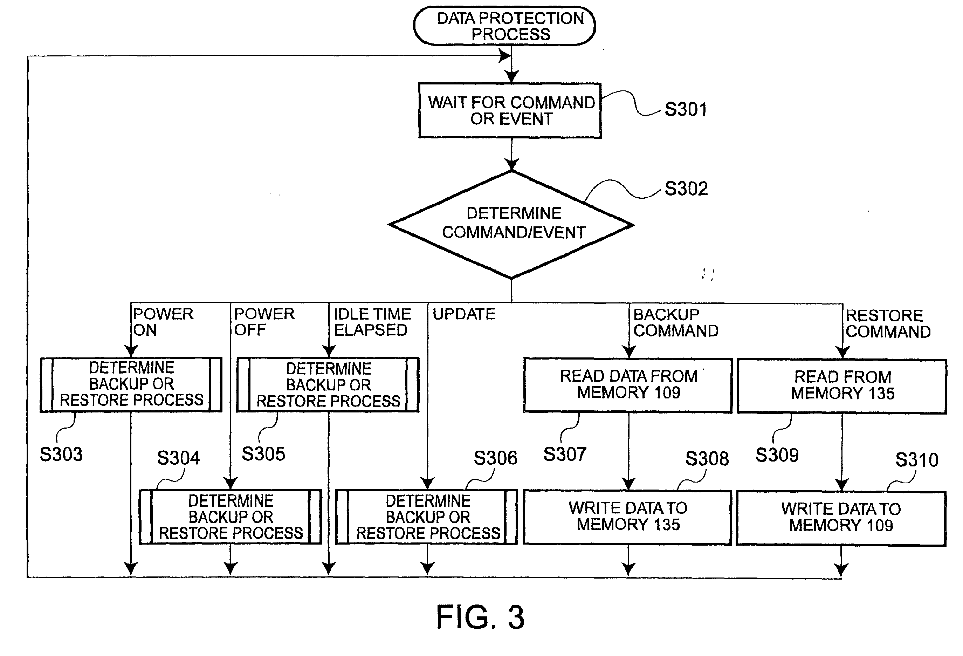

Fig. 3 is a flow chart of the data protection process.

The CPU 102 first waits for a data backup or data restore event (S301), and determines (S302) whether to back up or restore the protected data as explained above.

It should be noted that the backup and restore examples described above with reference to Fig. 2 are used in the following description. It will be understood that "backup process" means copying protected data from the memory 109 to the memory 135, and "restore process" means copying the protected data from the memory 135 to the memory 109.

Thus, upon each of the following events, the CPU 102 determines whether a condition for the backup or restore process is true and runs the backup or restore process (S303) as appropriate; control then returns to step S301 to wait for the next process:
- when the printer 101 is turned on (S302 returns power on),
- when the printer 101 is turned off (S302 returns power off),
- when the CPU 102 has been idle for a specified time (S302 returns idle time elapsed),event
- When the rewrite flag to is cleared to 0 (S302 returns update),

When a backup command is received from the host 161 (S302 returns backup command), the protected data is read from memory 109 (S307), stored in memory 135, and the rewrite flag for the memory 109 is cleared to 0 (S308); the control then returns to step S301 to wait for the next process.

When a restore command is received from the host 161 (S302 returns restore command), the protected data is read from memory 135 (S309) and copied to the memory 109 (S310); the control then returns to step S301 to wait for the next process.

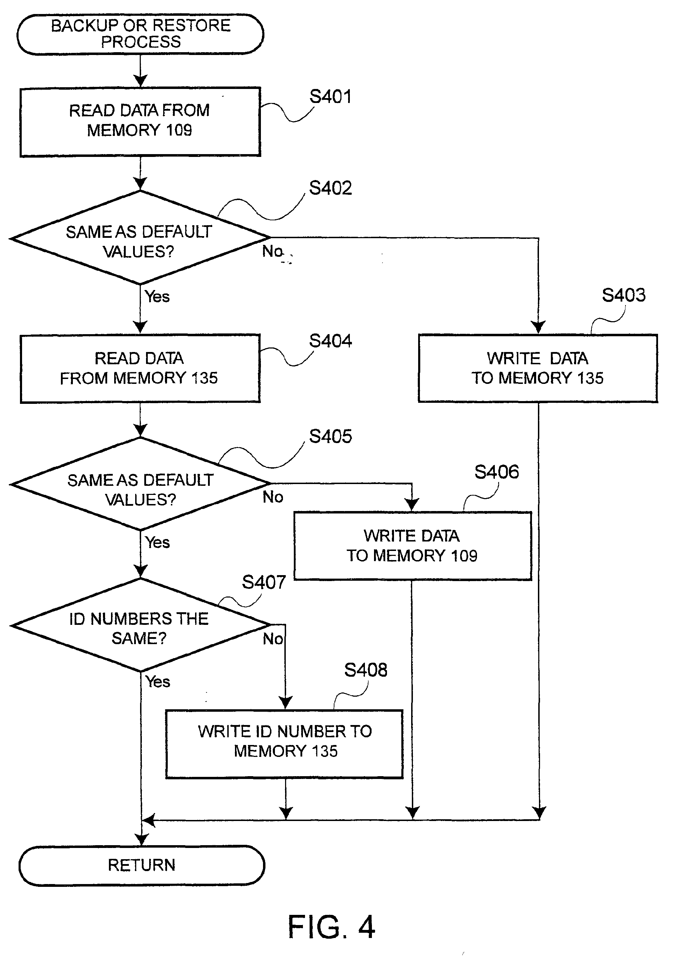

Fig. 4 is a flow chart of the routine for determining whether the backup or the restore process is to be executed.

First, the protected data is read from the memory 109 (S401) and compared with the corresponding default values also stored in the memory 109 to determine if all of the protected data are at their default values (S402). In this example this is considered to be the case if all of the following conditions are true.

Condition 1: The count values for individual protected data such as the number of lines printed, printer operating time, number of automatic paper cutter operations, and the number of memory rewrites are 0.

Condition 2: The checksum of the protected data stored in memory 109 equals the checksum predefined according to the default values of the protected data.

Condition 3: The rewrite flag is set to 1.

If the protected data are not at their respective default values, that is, if any of the protected data has been updated at least once (S402 returns *No*), the protected data is copied to the memory 135 and the rewrite flag of the memory 109 is cleared to 0 (S403), and the procedure ends.

However, if the protected data have their default values, that is, the operating parameters and history data have been cleared because of a repair, for example, or the main circuit board has been replaced (S402 returns *Yes),* the protected data is read from memory 135 (S404) and compared with the preset default values of the protected data in the memory 135 to determine if the protected data equal the default values (S405). This is considered to be the case if all of the following conditions are true.

Condition 1: The count values for individual protected data stored in the memory 135 such as the number of lines printed, printer operating time, number automatic paper cutter operations, and the number of times data were written to a non-volatile memory are 0.

Condition 2: The checksum of the protected data stored in memory 135 equals the checksum predefined according to the default values of the protected data.

If the protected data are not at their respective default values, that is, if the protected data has at least once been saved from the memory 109 to the memory 135 (S405 returns *No),* the protected data from the memory 135 is copied to the memory 109 (S406), and the procedure ends.

If the protected data in memory 135 are at their respective default values, that is, if the interface device has been replaced (S405 returns *Yes*), it is checked whether the ID number of the main circuit board stored among the protected data in the memory 109 is the same as that stored among the protected data in the memory 135 (S407). If they are not the same (S407 returns *No),* the ID number stored in memory 109 is copied to the memory 135 (S408), and the procedure ends. If the ID numbers are the same (S407 returns *Yes*), the ID number is not copied and the procedure ends.

An embodiment of the invention has been described by way of example only and is not intended to limit the scope of the present invention. It will be understood by those skilled in the art that various alternative embodiments can be achieved by replacing one or more of the elements described below with a functional equivalent, and that all such alternative embodiments are included in the scope of this invention as defined by the appended claims.

## Claims

1. A printing apparatus connected to an interface device (131) comprising:
a receiver (103) for receiving first data from a host device (161) through the interface device (131);
a printing unit (108) for printing said first data received by the receiver (103);
a rewritable first memory unit (109) for storing second data including operating parameter data and history data;
a data update unit for updating the said second data;
an event control unit (201) for detecting, as a backup event, that one or more predetermined first conditions are fulfilled; and
a data protection unit (202, 203) having a backup unit (202) for saving the updated second data to a rewritable second memory unit (135) in response to a backup event being detected, said second memory unit (135) being disposed in the interface device (131).

2. The apparatus of claim 1, wherein
said event control unit (201) is also for detecting, as a restore event, that one or more predetermined second conditions are fulfilled; and
the data protection unit (202, 203) further comprises a data restore unit (203) for restoring data from said second memory unit (135) to said first memory unit (109) in response to a restore event being detected.

3. The apparatus of claim 1 or 2, wherein one or both of said first and second memory units (109, 135) are adapted to store data in a nonvolatile manner.

4. The apparatus of any one of the preceding claims, wherein said first conditions include updating said operating parameter data by the data update unit.

5. The apparatus of any one of the preceding claims, wherein said first conditions include the power to the printing apparatus power being turned on.

6. The apparatus of any one of the preceding claims, further comprising a power-off command input means (110) for accepting a power-off command interrupting the power supply to the printing apparatus,
wherein said first conditions include reception of such power-off command.

7. The apparatus of claim 2 or any one of claims 3 to 6 as dependent on claim 2, wherein said second conditions include the power to the printing apparatus power being turned on and the operating parameter data being not stored in said first memory unit (109) but being stored in said second memory unit (135).

8. A computer-readable data storage medium carrying a program causing a computer connected to a host device (161) through an interface device (131) having said second memory unit (135) to function as a printing apparatus according to any of claims 1 to 10.

9. A data storage medium as described in claim 8, wherein the data storage medium is a Compact Disc, a floppy disk, a hard disc, a magneto-optical disc, a digital video disc, a magnetic tape, semiconductor memory, a digital versatile disc, or a memory card.

10. An interface device adapted to be used with a printing apparatus as defined in any one of claims 1 to 7 for connecting the printing apparatus to a host device (161), comprising:
a relay receiver (132) for receiving first data from the host device (161);
a relay transmitter (134) for sending the received first data to the printing apparatus;
a memory unit for storing data in a nonvolatile manner as said second memory unit (135); and
a connection unit (136) for connecting said second memory unit (135) to the printing apparatus to allow saving second data from the printing apparatus to said second memory unit (135);

11. The interface device of claim 10, wherein the connection unit (136) is adapted to allow copying data from said second memory unit (135) to the printing apparatus.

12. A method of controlling a printing apparatus, comprising:
(a) receiving first data from a host device (161) through an interface device (131);
(b) printing the first data received in step (a);
(c) updating second data including operating parameter data and history data stored in a rewritable first memory unit (109);
(d) detecting, as a backup event, that one or more predetermined first conditions are fulfilled; and
(e) saving said second data updated in step (c) to a rewritable second memory unit (135) disposed in said interface device (131) when a backup event is detected in step (d).

13. The method of claim 12, wherein
step (d) further comprises detecting, as a restore event, that one or more predetermined second conditions are fulfilled, and
step (e) further comprises restoring data from said second memory unit (135) to said first memory unit (109) in response to a restore event being detected in step (d).

14. The method of claim 12 or 13, wherein said first conditions include updating said operating parameter data by the data update unit.

15. The method of any one of claims 12 to 14, wherein said first conditions include the power to the printing apparatus power being turned on.

16. The method of any one of claims 12 to 15, further comprising
(f) receiving a power-off command and interrupting the power supply to the printing apparatus in response to this command,
wherein said first conditions include reception of the power-off command.

17. The apparatus of claim 13 or any one of claims 14 to 16 as dependent on claim 13, wherein said second conditions include the power to the printing apparatus power being turned on and the operating parameter data being not stored in said first memory unit (109) but being stored in said second memory unit (135).

18. A method of controlling an interface device connected to a printing apparatus and a host device (161), wherein the printing apparatus has a first memory unit (109) for storing data in a nonvolatile manner, and the interface device (131) has a second memory unit (135) for storing data in a nonvolatile manner, the method comprising:
(a) receiving first data from the host device (161);
(b) sending the received first data to the printing apparatus; and
(c) copying and nonvolatilely storing second data stored in said first memory unit (109) to said second memory unit (135).

19. The method of claim 18, further comprising
(d) copying and nonvolatilely storing data stored in said second memory unit (135) to said first memory unit (109).
